# FASCICULE DE BREVET EUROPEEN

(11) **EP 1 591 187 B1**
(45) Date de publication et mention de la délivrance du brevet: **03.11.2010**
(21) Numéro de dépôt: 05011079.0
(22) Date de dépôt: 29.06.1998
(51) Int. Cl.: B23K 26/00

(54) **Procédé de soudage de tôles revêtues par un faisceau d'énergie, tel qu'un faisceau laser**
Verfahren zum Schweißen von beschichteten Blechen mittels eines Energiestrahls, wie eines Laserstrahls
Process for welding coated sheet metal by means of an energy beam, such as a laser beam

(30) Priorité: 30.06.1997 FR 9708223
(43) Date de publication de la demande: 02.11.2005
(62) Demande divisionnaire de: 98933751.4
(73) Titulaire: AUTOMOBILES PEUGEOT, 75116 Paris (FR); AUTOMOBILES CITROEN, 92200 Neuilly-sur-Seine (FR); RENAULT S.A.S., 92100 Boulogne Billancourt (FR)
(72) Inventeur: Sanjeu, Catherine, 91460 Marcoussis (FR); Kielwasser, Mathieu, 68870 Bartenheim (FR); Fabbro, Rémy, 91160 Antony (FR); Criqui, Bernard, 92150 Suresnes (FR)
(74) Mandataire: Allain, Laurent

(56) Documents cités:
- WO-A-91/02621
- FR-A- 2 600 923
- US-A- 4 745 257
- PATENT ABSTRACTS OF JAPAN vol. 096, no. 008, 30 août 1996 (1996-08-30) & JP 08 090265 A (SUMITOMO METAL IND LTD), 9 avril 1996 (1996-04-09)
- SCHOBBERT H ET AL: "NEUE VERFAHRENSVARIANTE DES LASERSTRAHLSCHWEISSENS" SCHWEISSEN UND SCHNEIDEN, vol. 46, no. 5, 1 mai 1994 (1994-05-01), pages 207-210, XP000443483

## Description

La présente invention concerne un procédé de soudage de tôles revêtues par un faisceau d'énergie, tel que par exemple un faisceau laser.

Elle s'applique en particulier au soudage de tôles galvanisées, bien qu'elle soit également applicable au soudage de tôles revêtues de tout autre matériau dont la température d'évaporation est inférieure à la température de fusion du matériau de base constituant les tôles ou de toute structure multicouche présentant cette caractéristique.

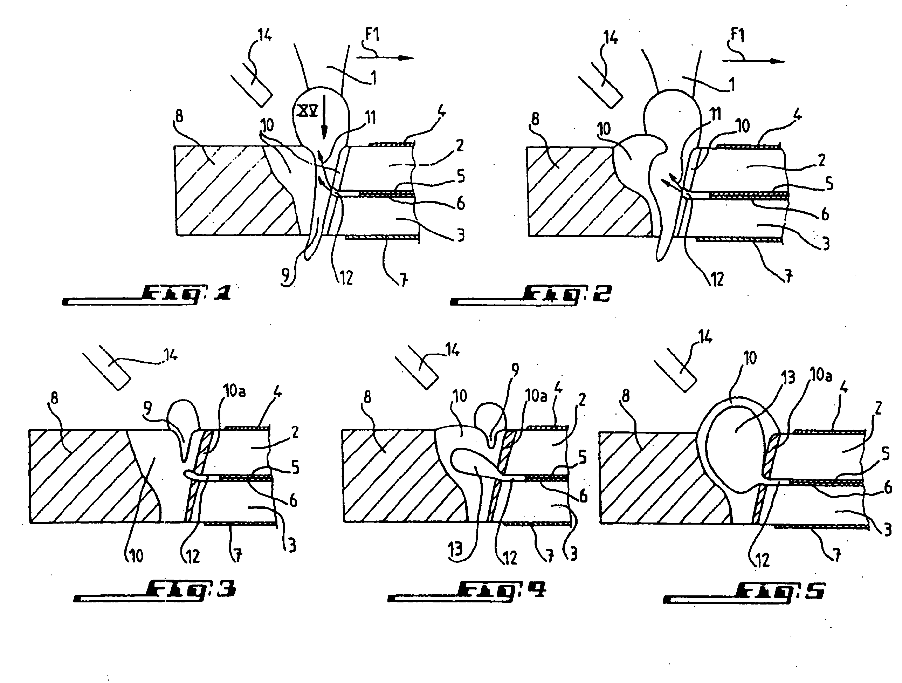

Les figures 1 et 2 représentent le soudage par un faisceau laser 1, qui fonctionne en mode pulsé ou continu, de deux tôles métalliques 2, 3 comportant respectivement sur leurs deux faces opposées deux revêtements de zinc 4, 5; 6, 7 et maintenues serrées l'une contre l'autre par tout moyen approprié au voisinage de l'emplacement de la soudure de façon que les deux revêtements internes 5, 6 soient compris entre les deux tôles 2, 3. Lors du déplacement du faisceau de soudage 1 dans le sens indiqué par la flèche F1, un cordon de soudure 8 est réalisé afin de lier les tôles 2, 3 l'une à l'autre et un passage 9, dénommé capillaire, est formé dans la zone de métal fondu 10. Lors du soudage des tôles revêtues 2, 3 au faisceau laser fonctionnant en mode continu, du fait que le point d'évaporation des revêtements 4-7 est inférieur au point de fusion du matériau de base constituant les deux tôles 2, 3 de la vapeur de zinc 11 emprisonnée entre ces deux tôles perce la paroi du bain liquide 10 comme représenté en figure 1 et pénètre dans le capillaire 9 pour frapper le front arrière de celui-ci comme représenté en figure 2, conduisant à un capillaire qui n'est plus stable et à une éjection du bain métallique fondu 10. Les inventeurs ont montré que le perçage de la paroi du bain liquide se fait en un ou plusieurs tunnels 12 comme indiqué sur les figures 1 et 2. Lors du soudage des tôles 2, 3 au faisceau laser fonctionnant en mode pulsé, la vapeur de zinc formée pendant chaque impulsion de soudage est évacuée par le capillaire sans provoquer d'instabilité du bain liquide comme représenté en figure 1. Pendant chaque impulsion de pause entre deux impulsions de soudage successives du faisceau d'énergie, le capillaire 9 se ferme comme représenté en figure 3.

On notera que pendant l'impulsion de pause, le niveau d'énergie du faisceau n'est pas nécessairement nul et qu'il peut encore contribuer au soudage. Cependant, par commodité, on utilisera les expressions "impulsion de soudage" et "impulsion de pause" dans la présente description pour désigner les niveaux haut et bas du faisceau en mode pulsé.

Si la pression de la vapeur de zinc est trop faible, cette vapeur reste confinée dans une zone autour du bain liquide 10 comme le montre la figure 3. Par contre, si cette pression de vapeur dépasse une pression critique, la vapeur de zinc pénètre dans le bain liquide 10 en formant une poche de gaz 13 qui atteint un équilibre sans éjection du bain liquide 10 (figure 4), ou soulève et éjecte complètement le bain liquide 10 (figure 5). La référence 14 désigne un dispositif d'amenée de gaz dirigé vers le bain liquide 10 et connu en soi.

On notera que pendant l'impulsion de pause, la partie 10a de la zone liquide 10 située du côté où les tôles ne sont pas encore soudées peut commencer à se solidifier : c'est pourquoi elle a été hachurée sur les figures 3 à 8.

De nombreuses solutions ont été proposées pour éliminer les inconvénients dus au dégagement incontrôlé des vapeurs de zinc conduisant à une soudure de mauvaise qualité.

On peut par exemple, citer la demande de brevet japonais JP 08090265, qui décrit un procédé de soudage laser, dans lequel un faisceau laser réalise un perçage dans la matière fondue pour évacuer les vapeurs. Cependant, la vapeur évacuée influe sur la stabilité du procédé de soudage.

Une autre solution connue consiste à réaliser, avant soudage, un jeu entre les tôles à souder pour permettre l'évacuation des vapeurs de zinc. Cependant, cette solution connue a pour inconvénients de prévoir une opération supplémentaire de réalisation de bossages, par exemple par emboutissage, sur les tôles pour la formation du jeu et de nécessiter un appareillage adapté pour cette opération.

Une autre solution connue consiste à supprimer le revêtement de zinc à l'endroit de la soudure et le remplacer par un revêtement différent, tel que par exemple un alliage de nickel. Cette solution a pour inconvénient d'occasionner un surcoût et d'être complexe du fait que l'on dépose un revêtement différent à certains endroits des tôles.

Selon encore une autre solution connue, les tôles à souder sont disposées verticalement et le faisceau d'énergie de soudage se déplace de bas en haut de sorte que le matériau fondu s'écoule par gravité, ce qui a pour effet d'améliorer l'évacuation de la vapeur de zinc. Cette solution nécessite un montage particulier pour que les tôles soient disposées verticalement et, éventuellement, dans le cas de pièces complexes et/ou de grandes dimensions telles que des portes de véhicules automobiles, de modifier l'orientation de la pièce pour que le faisceau d'énergie de soudage se déplace toujours de bas en haut.

La présente invention a pour but d'éliminer les inconvénients ci-dessus des solutions connues en mettant en oeuvre un procédé de soudage de tôles revêtues à l'aide d'un faisceau d'énergie qui permet d'obtenir une bonne qualité de soudure sans adaptation de la géométrie des pièces et sans utiliser d'appareillage complémentaire plus ou moins compliqué pour maintenir les tôles à souder.

A cet effet, l'invention propose un procédé de soudage par un faisceau d'énergie de tôles revêtues d'un matériau ayant une température d'évaporation inférieure à la température de fusion du matériau des tôles selon la revendication 1.

Le faisceau présente une section transversale sensiblement elliptique dont le grand axe est dirigé dans la direction de déplacement du faisceau laser de soudage.

Selon une variante de réalisation, le faisceau laser précité est incliné relativement à l'horizontale pour produire le capillaire elliptique.

Selon une autre variante de réalisation, on prévoit une ou plusieurs lentilles cylindriques ou asphériques, un ou plusieurs miroirs cylindriques ou asphériques, ou des éléments optiques diffractifs sur le trajet du faisceau laser pour réaliser le capillaire elliptique.

Selon encore une autre variante de réalisation, le faisceau laser précité oscille dans la direction de déplacement du soudage pour produire le capillaire elliptique.

Selon toujours une autre variante de réalisation, on prévoit au moins un autre faisceau laser coopérant avec le premier faisceau laser précité pour produire le capillaire elliptique.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :
- la figure 1 représente un procédé de soudage de tôles revêtues par un faisceau laser avec formation de vapeur provenant de l'évaporation du matériau des revêtements des tôles ;
- la figure 2 représente l'effet d'éjection du matériau fondu lors du soudage par la vapeur du matériau des revêtements des tôles ;
- la figure 3 représente l'état de la soudure pendant une impulsion de pause entre deux impulsions de soudage consécutives du faisceau d'énergie avec la vapeur de zinc confinée dans une zone autour du bain fondu ;
- la figure 4 représente la formation d'une poche de vapeur de zinc formée dans le bain fondu pendant une

impulsion de pause du faisceau d'énergie sans provoquer d'éjection de ce bain ;
- la figure 5 représente la formation d'une poche de vapeur de zinc dans le bain fondu telle qu'elle éjecte complètement ce bain ;

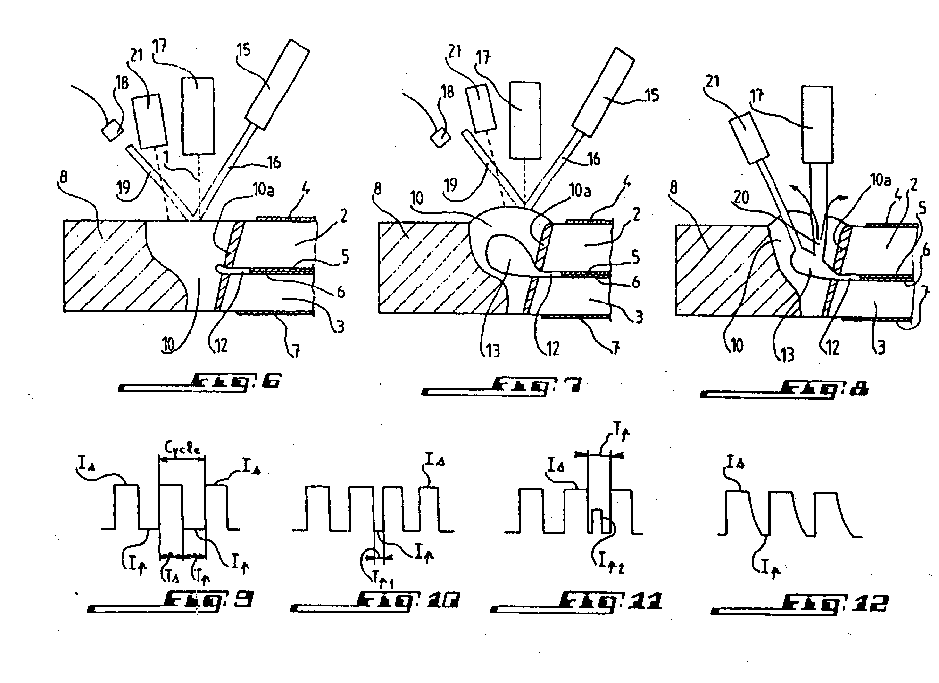

- les figures 6 à 8 représentent un mode de réalisation de l'invention permettant de détecter un soulèvement du bain fondu et de percer le bain fondu pour évacuer la vapeur de zinc présente dans la poche de ce bain ;
- la figure 9 représente un train normal d'impulsions de soudage du faisceau d'énergie de soudage fonctionnant en mode pulsé pour souder deux tôles ;
- les figures 10 à 12 représentent chacune un train d'impulsions modifié du faisceau d'énergie de soudage en mode pulsé permettant de percer la poche de vapeur de zinc dans le bain fondu ;

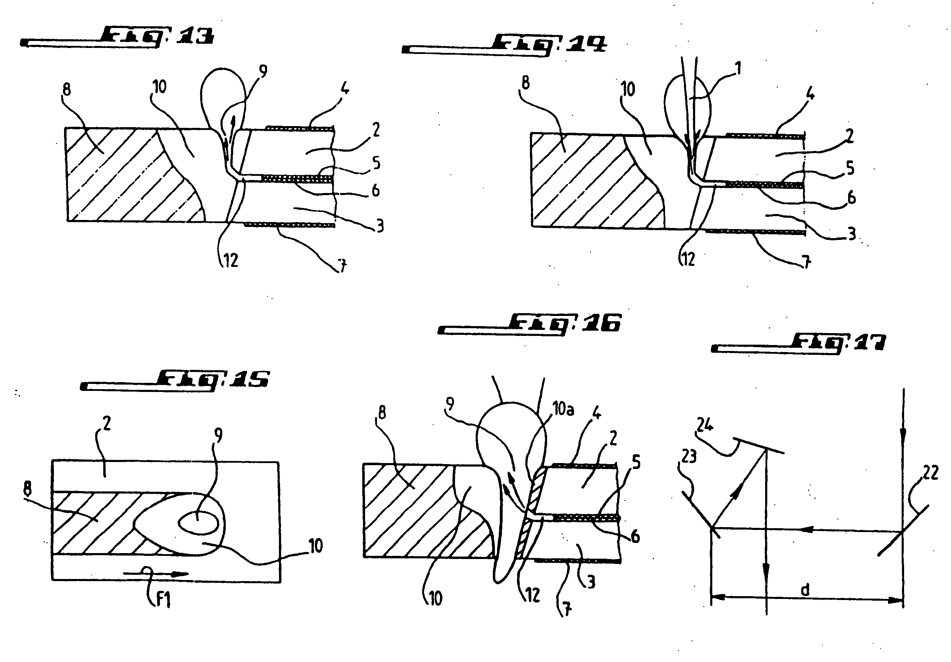

- les figures 13 et 14 représentent une variante de réalisation de l'invention selon laquelle le faisceau d'énergie de soudage permet de maintenir une communication entre le capillaire et un tunnel formé dans l'interface des deux tôles à souder pendant chaque impulsion de pause de ce faisceau pour favoriser l'évacuation de la vapeur de zinc ;
- la figure 15 est une vue de dessus suivant la flèche XV de la figure 1 et représentant un mode de réalisation de l'invention permettant de modifier la forme en section transversale du capillaire pour favoriser l'évacuation de la vapeur de zinc ;
- la figure 16 est une vue en coupe semblable aux figures 1 à 8, mais dans le mode de réalisation de la figure 15 ; et
- la figure 17 représente un système optique permettant d'obtenir un faisceau de section elliptique.

Le procédé de l'invention permettant de souder des tôles revêtues à l'aide d'un faisceau d'énergie tel qu'un faisceau laser ou un faisceau d'électrons, en évitant les éjections du bain métallique, est décrit en référence à deux modes de réalisation différents, l'un utilisant un faisceau d'énergie de soudage fonctionnant en mode pulsé et l'autre utilisant un tel faisceau fonctionnant aussi bien en mode pulsé qu'en mode continu.

Le premier mode de réalisation du procédé de l'invention, où le faisceau d'énergie fonctionne uniquement en mode pulsé, va être décrit en référence aux figures 6 à 8, dont les parties communes à celles déjà décrites dans le procédé de soudage des figures 1 à 5, portent les mêmes références.

Selon ce mode de réalisation, on détecte le soulèvement du bain liquide 10 lors de la formation de la poche de vapeur de zinc 13 dans ce bain pendant le temps de pause des impulsions du faisceau d'énergie incident en utilisant une source 15 émettant un faisceau incident 16, tel qu'un faisceau laser HeNe, en direction du bain liquide 10. Bien entendu, la source 15 est différente de la source 17 servant au soudage et on prévoit également un détecteur 18, tel que par exemple une photodiode, permettant de mesurer les variations, directionnelles, d'intensité ou de forme, du faisceau 19 réfléchi par la surface du bain liquide 10. Les signaux électriques fournis par le détecteur 18 et représentatifs de telles variations, sont appliqués à un circuit de traitement (non représenté) apte à commander la source 17 ou une source annexe d'un faisceau d'énergie de façon que les impulsions émises par celle-ci permettent de percer la poche de vapeur de zinc 13 au travers du bain liquide 10 et d'évacuer à l'extérieur la vapeur de zinc lorsque la surface du bain liquide 10 s'est soulevée à une hauteur déterminée. Plus précisément, lorsque la surface du bain liquide 10 est soulevée par la poche 13 comme représenté en figure 7, le faisceau réfléchi 19 peut être dévié par la forme bombée de surface du bain 10 de façon à ne plus frapper le détecteur 18 ou à le frapper sous un angle différent. Dans ces conditions, le détecteur 18 ne fournit plus de signal électrique ou fournit un signal modifié de sorte que le circuit de traitement commande la source 17 ou la source annexe pour que le faisceau d'énergie réalise, pendant la durée Tp de chaque impulsion de pause Ip du train d'impulsions représenté en figure 9 entre deux impulsions de soudage successives Is, un perçage 20 dans la couche supérieure du bain liquide 10 et débouchant dans la poche 13 (figure 8). Un tel perçage peut s'effectuer pendant chaque impulsion de pause en diminuant la largeur de la durée de l'impulsion de pause Ip comme indiqué en Tp1 en figure 10 ou en introduisant pendant la durée Tp de l'impulsion de pause de niveau bas Ip une impulsion supplémentaire Ip2 comme représenté en figure 11 et d'une largeur et d'un niveau d'intensité définis de façon à ne percer que la partie en forme de bulle du bain liquide 10 pour atteindre la poche 13. Bien entendu, la détection de la montée du bain liquide 10 sous l'effet de la poche de vapeur de zinc 13 peut s'effectuer par tout autre dispositif optique et de traitement d'image, par exemple par une caméra vidéo, par interférométrie, etc ..., ces dispositifs étant de préférence intégrés dans la tête optique de focalisation du faisceau de soudage. On a représenté sur les figures 6 à 8 la source annexe de faisceau laser 21 utilisée pour favoriser l'évacuation de vapeur de zinc et de préférence située à l'arrière du capillaire 9 car on a constaté que les vapeurs s'évacuent plus facilement à l'arrière de ce capillaire.

Selon une variante du premier mode de réalisation de l'invention, le perçage de la poche de vapeur de zinc 13 au travers du bain liquide 10 s'effectue par détection à l'aide de moyens appropriés de la disparition des vaguelettes à la surface du bain liquide. En effet, un éventuel gonflement du bain liquide lisse les irrégularités en surface de celui-ci dues aux agitations hydrodynamiques. Les vaguelettes disparaissent ou s'amenuisent sous l'action des forces de tension de surface et la détection de toute modification de la surface du bain 10 pourra révéler une formation de poche de vapeur de zinc 13. Une telle information pourra être détectée et traitée comme décrit dans la variante de réalisation précédente en adaptant le train d'impulsions du faisceau énergétique, de préférence le faisceau de soudage, comme représenté à la figure 10 ou à la figure 11.

Selon une autre variante de ce mode de réalisation, le perçage de la poche de vapeur de zinc 13 peut s'effectuer en prévoyant le soulèvement du bain liquide 10 par mesure de la quantité de vapeur de zinc évacuée préalablement. En effet, comme déjà expliqué précédemment, l'opération de soudage se traduit par l'évaporation, à l'interface des tôles à souder 2, 3, d'une certaine quantité du revêtement de zinc. Si la quantité de vapeur de zinc évacuée pendant chaque impulsion de pause du faisceau d'énergie est inférieure à la quantité prédéterminée à évacuer, une éjection du bain liquide 10 est prévisible. Dans ces conditions, le résultat d'une telle comparaison est exploité de façon à diminuer la durée de chaque impulsion de pause comme représenté en figure 10 ou à introduire une impulsion supplémentaire dans l'impulsion de pause comme représenté en figure 11 pour réaliser pendant chaque impulsion de pause le perçage 20 d'évacuation de la vapeur de zinc présente dans la poche 13. La quantité de zinc évacuée lors du soudage peut être mesurée par une méthode spectroscopique après étalonnage par une analyse en régime de condition stable.

Selon toujours une autre variante du premier mode de réalisation de l'invention, le perçage 20 de la poche de vapeur de zinc 13, au lieu d'être réalisé après détection en temps réel du soulèvement du bain 10 comme expliqué en référence aux figures 6 à 8, peut être réalisé en permanence, d'une manière systématique, dans chaque cycle de soudage Ts + Tp du train d'impulsions émis par la source d'énergie de soudage 17 ou la source annexe. Ainsi, durant la durée Tp de l'impulsion de pause Ip de ce train d'impulsions, au moins une impulsion de forme adaptée Ip2 peut être introduite comme représenté en figure 11 pour réaliser le perçage 20.

Selon une dernière variante de ce mode de réalisation de l'invention, l'évacuation de la vapeur de zinc peut également s'effectuer en maintenant une communication entre le capillaire 9 du bain liquide 10 et le tunnel 12 formé comme expliqué précédemment en référence aux figures 1 et 2. A cet effet, la forme du train d'impulsions émis par le faisceau énergétique de soudage ou le faisceau énergétique externe sera choisie de façon à être conforme à celle du train d'impulsions de la figure 11 ou à celle du train d'impulsions de la figure 12 qui sont des formes de trains d'impulsions données à titre d'exemple. Ainsi, pendant chaque cycle de soudage, l'impulsion de pause Ip est adaptée pour réaliser la liaison ou communication permanente entre le tunnel 12 et le capillaire 9 comme représenté en figure 13. La figure 14 montre le faisceau d'énergie à émission par impulsions 1 délivré par la source de soudage ou par la source externe et dont les impulsions sont générées conformément au train d'impulsions de la figure 11 ou de la figure 12 pour former la communication permanente entre le tunnel 12 et le capillaire 9.

Conformément au second mode de réalisation de l'invention, le faisceau d'énergie permettant de souder les tôles revêtues 2, 3 aussi bien en mode de fonctionnement pulsé qu'en mode de fonctionnement continu en améliorant l'échappement de la vapeur de zinc à travers le capillaire 9 et évitant ainsi les éjections du bain liquide 10, est adapté pour réaliser le capillaire 9 de sorte qu'il présente en section transversale une forme allongée notamment sensiblement elliptique comme représenté en figure 15, le grand axe de cette forme elliptique étant dirigé dans la direction de déplacement du faisceau d'énergie de soudage symbolisé par la flèche F1. Le faisceau d'énergie permettant de réaliser le capillaire elliptique 10 peut être fourni par la source de soudage ou une source externe et est de préférence un faisceau laser. La répartition énergétique de cette section elliptique du capillaire 10 est déterminée pour permettre un processus de soudage tout en allongeant le capillaire afin de ne pas perturber la sortie de la vapeur du revêtement, de diminuer l'influence de la vapeur métallique lors de son évacuation sur la stabilité du procédé de soudage et ainsi d'augmenter le débit grâce à une section plus importante du capillaire 9. On a constaté que l'on obtenait un capillaire stable avec un faisceau de section allongée, ce qui n'est pas toujours le cas avec un faisceau de section circulaire.

On voit sur la figure 16 que, grâce à cette augmentation de section, les vapeurs de zinc s'échappent plus facilement et/ou frappent le front arrière du capillaire sans le déformer et/ou sans risquer des éjections de liquide comme dans le cas, par exemple, de la figure 2.

La forme allongée notamment elliptique du capillaire 9 peut être réalisée par différentes techniques. L'une de ces techniques consiste à utiliser un faisceau d'énergie à section circulaire mais incliné relativement à la face supérieure de la tôle 2 de manière que la section horizontale de ce faisceau soit elliptique. Une autre technique consiste à prévoir une ou plusieurs lentilles cylindriques ou asphériques, un ou plusieurs miroirs cylindriques ou asphériques, ou des éléments diffractifs ou tout autre dispositif analogue disposé sur le trajet du faisceau d'énergie de manière à générer la forme elliptique du capillaire 9 pendant l'opération de soudage.

La figure 17 représente un système optique permettant de réaliser un faisceau elliptique. Ce système comprend deux miroirs cylindriques 22 et 23 formant de manière connue un télescope de façon que le faisceau qu'ils forment ait un rapport longueur sur largeur défini et un miroir parabolique classique 24 qui focalise ce faisceau en un point. La distance d entre les deux miroirs 22 et 23 est ajustable et permet ainsi d'avoir une focalisation suivant le grand axe et le petit axe de l'ellipse au même endroit. En d'autres termes, l'astigmatisme peut être réglé, si besoin, à zéro.

L'intérêt de ce système optique est de posséder un système de focalisation et un système générant le rapport ci-dessus indépendants l'un de l'autre. On pourra changer le rapport ou changer la focalisation en gardant un rapport identique. Il est à noter que les angles d'incidence du faisceau sur les miroirs sont optimisés de sorte que le système optique se règle facilement et minimise les aberrations optiques.

Encore une autre technique consiste à utiliser un faisceau d'énergie oscillant dans la direction de déplacement du soudage de manière à produire la forme elliptique du capillaire 9. Enfin, deux ou plusieurs faisceaux d'énergie, ayant des positions et des angles d'attaque appropriés, peuvent être utilisés pour créer le capillaire elliptique 9.

Ainsi, une optimisation de la forme elliptique du capillaire 9 permet une évacuation de la vapeur de zinc sans perturber le bain métallique 10 et d'augmenter le débit d'échappement de la vapeur du matériau du revêtement.

On signalera enfin que la répartition d'intensité dans la section du faisceau de soudage sera telle qu'elle permette le soudage tout en l'optimisant afin d'économiser de l'énergie on a constaté que les meilleurs résultats sont obtenus avec l'intensité du faisceau plus forte à l'avant de celui-ci par rapport à sa direction de déplacement.

## Revendications

1. Procédé de soudage par un faisceau laser de tôles (2,3) revêtues d'un matériau (4-7) ayant une température d'évaporation inférieure à la température de fusion du matériau des tôles (2,3) de sorte que le matériau du revêtement (4-7) s'évapore pendant le soudage en créant de la vapeur présente dans le capillaire (9) formé par la matière fondue de soudage, **caractérisé en ce que** le faisceau laser (1) est dirigé sur la zone de soudage et est agencé pour réaliser un capillaire (9) présentant une section transversale allongée suivant la direction de déplacement du faisceau laser de soudage et permettant d'améliorer l'évacuation de la vapeur du matériau de revêtement sans perturbation à travers le capillaire (9).

2. Procédé selon la revendication 1, **caractérisé en ce que** le faisceau laser de soudage présente une section transversale sensiblement elliptique dont le grand axe est dirigé dans la direction de déplacement du faisceau laser de soudage.

3. Procédé selon la revendication 2, **caractérisé en ce que** le faisceau laser (1) précité est incliné relativement à l'horizontale pour produire le capillaire elliptique (9).

4. Procédé selon la revendication 2, **caractérisé en ce qu'**il consiste à prévoir une ou plusieurs lentilles cylindriques ou asphériques, un ou plusieurs miroirs cylindriques ou asphériques, ou des éléments optiques diffractifs sur le trajet du faisceau laser pour réaliser le capillaire de forme elliptique (9).

5. Procédé selon la revendication 2, **caractérisé en ce que** le faisceau laser (1) oscille dans sa direction de déplacement du soudage pour produire le capillaire elliptique (9).

6. Procédé selon la revendication 2, **caractérisé en ce qu'**il consiste à prévoir au moins un autre faisceau laser coopérant avec le premier faisceau laser (1) précité pour produire le capillaire elliptique (9).

## Claims

1. Method of welding, using a laser beam, for metal sheets (2,3) coated in a material (4-7) with a temperature of evaporation lower than the melting temperature of the material of the metal sheets (4-7), so that the coating material (4-7) evaporates during welding, creating the vapour existing in the capillary (9) which is formed by the material melted during the welding, **characterized in that** the laser beam (1) is directed towards the welding zone and is arranged so as to produce a capillary (9) with an elongated transverse cross-section along the direction of movement of the welding laser beam, and allowing an improved evacuation of the vapour of the coating material without perturbation across the capillary (9).

2. Method according to claim 1, **characterized in that** the welding laser beam has a substantially elliptical transverse cross-section, whose major axis is directed towards the direction of movement of the welding laser beam.

3. Method according to claim 2, **characterized in that** the aforementioned laser beam (1) is inclined with respect to the horizontal in order to produce the elliptical capillary (9).

4. Method according to claim 2, **characterized in that** the method consists of providing one or more cylindrical or aspherical lenses, one or more cylindrical or aspherical mirrors, or diffractive optical elements along the trajectory of the laser beam to produce the capillary with an elliptical shape (9).

5. Method according to claim 2, **characterized in that** the laser beam (1) oscillates in the direction of movement of the welding to produce the elliptical capillary (9).

6. Method according to claim 2, **characterized in that** the method consists of providing at least one other laser beam cooperating with the aforementioned first laser beam (1) to produce the elliptical capillary (9).

## Patentansprüche

1. Verfahren zum Laserstrahlschweißen von Blechen (2, 3), die mit einem Material (4-7) beschichtet sind, dessen Verdampfungstemperatur niedriger als die Schmelztemperatur des Materials der Bleche (2, 3) ist, so dass das Beschichtungsmaterial (4-7) während des Schweißens verdampft und dabei Dampf erzeugt, der in der durch das Schmelzgut der Schweißung gebildeten Kapillare (9) vorliegt, **dadurch gekennzeichnet, dass** der Laserstrahl (1) auf die Schweißzone gerichtet und derart angeordnet wird, dass er eine Kapillare (9) mit einem länglichen Querschnitt bildet, die der Bewegungsrichtung des Schweißlaserstrahls folgt, und es ermöglicht, die Ableitung des Dampfes des Beschichtungsmaterials störungsfrei über die Kapillare (9) zu verbessern.

2. Verfahren nach Anspruch 1, **dadurch gekennzeichnet, dass** der Schweißlaserstrahl einen im Wesentlichen elliptischen Querschnitt aufweist, dessen Hauptachse in die Bewegungsrichtung des Schweißlaserstrahls gerichtet ist.

3. Verfahren nach Anspruch 2, **dadurch gekennzeichnet, dass** der Laserstrahl (1) bezogen auf die Horizontale geneigt ist, um die elliptische Kapillare (9) zu erzeugen.

4. Verfahren nach Anspruch 2, **dadurch gekennzeichnet, dass** es darin besteht, eine oder mehrere zylindrische oder asphärische Linsen, einen oder mehrere zylindrische oder asphärische Spiegel oder diffraktive optische Elemente im Laserstrahlengang vorzusehen, um die Kapillare (9) mit elliptischer Form zu bilden.

5. Verfahren nach Anspruch 2, **dadurch gekennzeichnet, dass** der Laserstrahl (1) in seiner Bewegungsrichtung des Schweißens oszilliert, um die elliptische Kapillare (9) zu erzeugen.

6. Verfahren nach Anspruch 2, **dadurch gekennzeichnet, dass** es darin besteht, mindestens einen weiteren Laserstrahl vorzusehen, der mit dem oben erwähnten ersten Laserstrahl (1) zusammenwirkt, um die elliptische Kapillare (9) zu erzeugen.
